# EUROPEAN PATENT SPECIFICATION

(11) **EP 2 600 075 B1**
(45) Date of publication and mention of the grant of the patent: **11.08.2021**
(21) Application number: 12194869.9
(22) Date of filing: 29.11.2012
(51) Int. Cl.: B32B 5/18, B32B 5/22, F24F 13/22, B32B 27/06, B32B 27/32, F25D 21/14, B32B 5/14

(54) **Molded parts and methods of manufacture**
Formteil und Herstellungsverfahren
Pièces moulées et procédés de fabrication

(30) Priority: 01.12.2011 US 201161565706 P
(43) Date of publication of application: 05.06.2013
(73) Proprietor: CARRIER CORPORATION, Farmington, Connecticut 06034-4015 (US)
(72) Inventor: Crippa, Giacomo, MB-20871 Vimercate (IT); Citarella, Alfonso, MB-20852 Villasanta (IT)
(74) Representative: Dehns

(56) References cited:
- EP-A1- 2 228 609
- JP-A- H0 587 361
- JP-A- H1 122 998
- JP-A- 2000 233 475
- JP-A- 2001 205 654
- JP-B2- 3 081 491
- JP-U- S5 575 722
- US-A- 5 225 448
- Anonymous: "Crystallinity in Polymers", , 31 December 2003 (2003-12-31), XP055578223, Retrieved from the Internet: URL:https://pslc.ws/macrog/crystal.htm [retrieved on 2019-04-05]

## Description

### BACKGROUND

The disclosure relates to refrigeration. More particularly, the disclosure relates to molded condensate collection pans/trays (drain pans).

In exemplary refrigeration systems (e.g., HVAC systems, refrigerated cases, and the like). A heat absorption heat exchanger (evaporator) is exposed to air or a forced air stream. Water from the air condenses on the evaporator and is collected for removal.

One exemplary group of collection systems involves collecting the condensate water in a drain pan. The drain pan may be waterproof to retain the water and may have sufficient thermal insulation to avoid the cool condensate chilling the outside of the pan and causing further condensation on the outside of the pan. One exemplary pan provides separate waterproof and insulating layers. The waterproof layer (liner) (e.g., polypropylene or polystyrene) may be molded in a first mold. The molded liner is transferred to a second mold wherein an insulative layer (e.g., expanded polystyrene) is overmolded to the liner.

Such a pan may be used in an air handling unit (AHU) of an HVAC system. An exemplary HVAC system includes a chiller system with a vapor compression system providing chilled heat transfer liquid (e.g., water). The chilled water is delivered to individual AHUs. Each AHU includes a liquid-air heat exchanger receiving the chilled water. The AHU has a fan driving an airflow across the heat exchanger. An exemplary AHU is ceiling-mounted with a central underside inlet. A fan draws air up through the inlet and directs the air laterally outward to the heat exchanger which at least partially surrounds the fan. Air passes through the heat exchanger and may be directed back downward to peripheral outlets for discharge from the AHU. The drain pan may have a central aperture for passing the inlet airflow. The drain pan may have a channel circumscribing the inlet. The channel may correspond to the planform of the heat exchanger and may partially accommodate the heat exchanger. The channel may have a depressed/deeper region wherein a pump is located for discharging condensate liquid. The channel may generally slope toward the depressed region.

JP 3081491 B2 discloses a condensate drain pan having the features of the preamble of claim 1.

### SUMMARY

The invention provides a condensate drain pan as set forth in claim 1.

The invention also provides a method for manufacturing a condensate drain pan, as set forth in claim 12.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is a view of a drain pan of an air handling unit (AHU) of an HVAC system.
FIG. 2 is a sectional view of the drain pan.
FIG. 3 is a schematic view of an HVAC system.
FIG. 4 is a view of an air handling unit (AHU) of the system of FIG. 1.
FIG. 5 is a sectional view of a mold for molding the drain pan.
FIG. 6 is a schematized sectional view of the AHU of FIG. 4.

Like reference numbers and designations in the various drawings indicate like elements.

### DETAILED DESCRIPTION

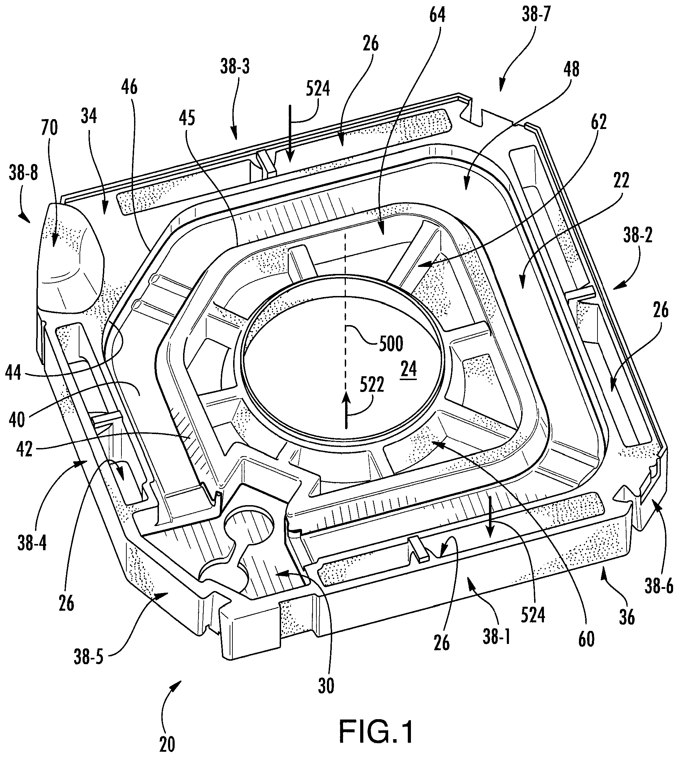

FIG. 1 shows a condensate drain pan 20 configured for use in one particular air handling unit (AHU) of a heating ventilation and air conditioning (HVAC) system. Other configurations would be appropriate for use in other AHUs, use elsewhere in HVAC systems or non-HVAC use (e.g., refrigerated cases). The pan 20 has a channel 22 (well or other recess) shaped and dimensioned to receive dripping atmospheric condensate (water) from a heat absorption heat exchanger thereabove. In the exemplary AHU implementation/configuration, the pan has a central vertical hole or aperture 24 (e.g., a circular planform hole having a central vertical axis 500) for passing an airflow to or from the heat exchanger. The exemplary channel 22 fully circumscribes/surrounds/encircles the aperture 24. As discussed further below, this particular configuration includes peripheral apertures or holes 26 radially outboard of the channel for passing the airflow (e.g., if a leg 522 of the airflow is an inlet leg passing through the aperture to the heat exchanger, a leg 524 passing through the apertures 26 is a return/outlet/discharge leg returning the airflow to the room or other conditioned space).

As is discussed further below, the exemplary pan has a generally square planform corresponding to a generally square housing planform of the AHU. Proximate one of the corners of the square, the channel 22 has a deepened region or well 30 which may receive a pump to pump out accumulated condensate. The exemplary pan generally includes an upper surface 34, a lower surface or underside 36, and a perimeter 38. The exemplary perimeter 38 includes portions 38-1, 38-2, 38-3, and 38-4, along respective sides of the square planform and portions 38-5, 38-6, 38-7, and 38-8 along relieved/removed corners of such planform adjacent the deepened area. Other greatly different overall shapes may be appropriate for other uses.

The exemplary channel includes a base portion or bottom 40, an inboard (radially) sidewall 42 extending upward from the base, and an outboard sidewall 44 extending upward from the base. The sidewalls 42 and 44 have respective rims 45 and 46 along the pan upper surface. The exemplary base generally slopes toward the deepened area from a high point 48 approximately diametrically opposite the deepened area 30. Alternative implementations may involve a drain port in the drain pan and/or a remote pump. The exemplary pan further includes a boss 60 circumscribing the aperture 24 and a plurality of radial ribs 62 extending outward from the boss to a wall 64 inboard of the channel. FIG. 1 further shows a fresh air diverter 70 (discussed further below). The exemplary channel is purely a recessed/depressed region and does not have any penetration to the underside of the pan. An alternative implementation may have a penetration (e.g., hole) such as for a drain (e.g., if no pump or a remote pump is used).

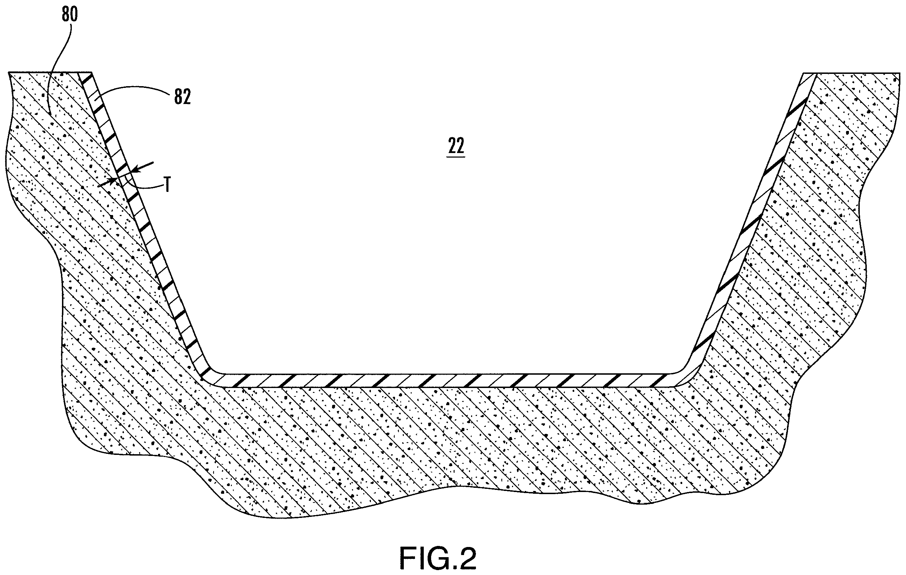

As is discussed further below, the pan includes an expanded porous polymeric substrate 80 (FIG. 2), comprising an expanded bead material (such as porous expanded polypropylene (PEPP)). Along the channel 22, there is a crystallized layer 82 of the substrate material. The crystallization provides water tightness. The substrate material may offer a combination of lightness, ease of manufacture, and sound deadening.

FIG. 2 shows a cross-section of the channel with the crystallized layer shown as having a thickness T. An exemplary characteristic thickness T (e.g., a median along the channel) is in excess of 0.2 millimeters, more narrowly, in excess of 0.3 millimeters or an exemplary 0.2-1.0 millimeters or 0.3-1.0 millimeters or 0.4-0.8 millimeters. Beyond the channel, the exemplary embodiment has essentially no crystallization.

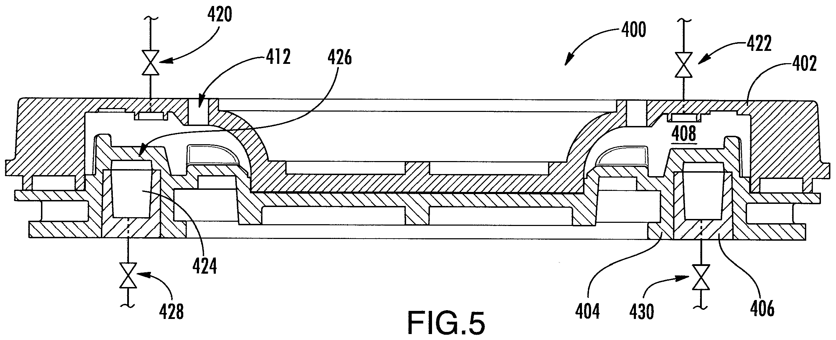

FIG. 5 shows a mold 400 for molding the pan 20. The exemplary mold molds the pan upside-down, thus the mold has an upper half (e.g. essentially formed by a single piece 402, and a lower half (e.g., essentially formed by pieces 404 and 406 discussed below). Various conventional molding features such as seals, fittings, bosses, and the like are not shown for ease of illustration. A mold cavity 408 is defined between the mold halves. There may be multiple injection ports/gates 412 for introducing the molding material (e.g., EPP) from the source (not shown, e.g., of a conventional molding machine in which the mold halves are mounted). FIG. 5 also shows a source of and means for introducing and evacuating fluid (e.g., steam) from the cavity 408. Exemplary means include one or more steam lines 420 (shown schematically with valves) for introducing the steam and one or more similar lines 422 for evacuating the steam.

As is discussed further below, the mold lower half includes a plenum 424 (e.g., formed between the pieces 404 and 406). The plenum is along and in close thermal communication with the portion 426 of the lower mold that molds the channel (and, if any, the broader region to be crystallized). FIG. 5 also shows a source of and means for introducing and evacuating fluid (e.g., steam) from the cavity 424. Exemplary means include one or more steam lines 428 (shown schematically with valves) for introducing the steam and one or more similar lines 430 for evacuating the steam.

In the method for manufacturing the pan, the mold sections are closed. The bead material is then injected so as to largely fill the cavity 408. Steam is then injected through the lines 420 so as to pass through the bead material and fuse (or further fuse) the beads at least partially. The mold is then water cooled via water passageways or a jacket (not shown) so as to cool and stabilize the molded piece. Crystallization steam is then injected via the lines 428 and evacuated via the lines 430 so as to locally heat the surface of the mold portion 426 to heat the channel surface of the molding and to locally melt/crystallize the material. This steam may be at a higher temperature than the fusing steam and the exposure time may be sufficient to cause the requisite melting. The part is then allowed to cure (e.g., via active and/or passive cooling of the mold). The mold halves are then separated and the pan extracted. There may then, if appropriate, be any trimming of flash/gates, and machining of additional features if required.

Other than the pan, the remaining system components may be made according to existing or yet-developed techniques appropriate for the system components. No changes to such components are necessarily required and the exemplary pan may be formed as a drop-in replacement or introduced as a running change in production replacing a similarly shaped/dimensioned baseline pan. Relative to the baseline, there may be one or more of several advantages depending upon implementation. For example, the single-shot molding process may involve manufacturing cost reduction relative to a two-shot process (separate molding of the liner and the substrate). Additionally, the liner may be relatively thin compared with the baseline. For example, pre-molding of a baseline liner may require the liner to be relatively thick. Accordingly, thinning of the liner may save material cost and/or reduce material consumption. Additionally, the thin liner may reduce sound transmission.

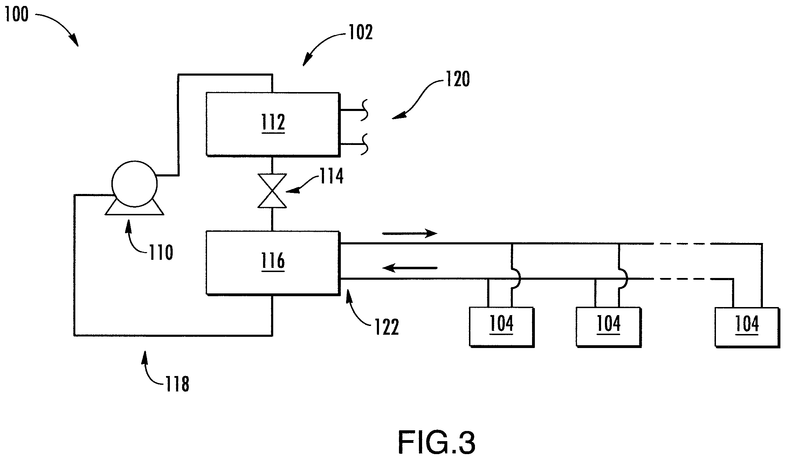

FIG. 3 schematically shows an HVAC system 100 including a chiller 102 delivering a heat transfer liquid (e.g., water) to a plurality of air handling units (AHUs) 104. The exemplary chiller comprises a vapor compression system having a compressor 110, a heat rejection heat exchanger 112, an expansion device 114, and a heat absorption heat exchanger 116 along a recirculating refrigerant flowpath 118. This is a simplified configuration for purposes of illustration and various more detailed configurations may be implemented in practice. Except for modifications involving the drain pan, this may represent any of a number of existing or yet-developed configurations and may be manufactured using techniques and materials currently used or otherwise appropriate for such systems and may be used according to methods currently used or appropriate for such systems.

The exemplary heat exchangers may refrigerant-water heat exchangers with respective recirculating water loops 120 and 122. The heat absorption heat exchanger water loop 122 extends toward and branches to the AHUs to deliver chilled water to the heat exchangers of each AHU. In alternative implementations, the heat rejection heat exchanger 112 is a refrigerant-air heat exchanger.

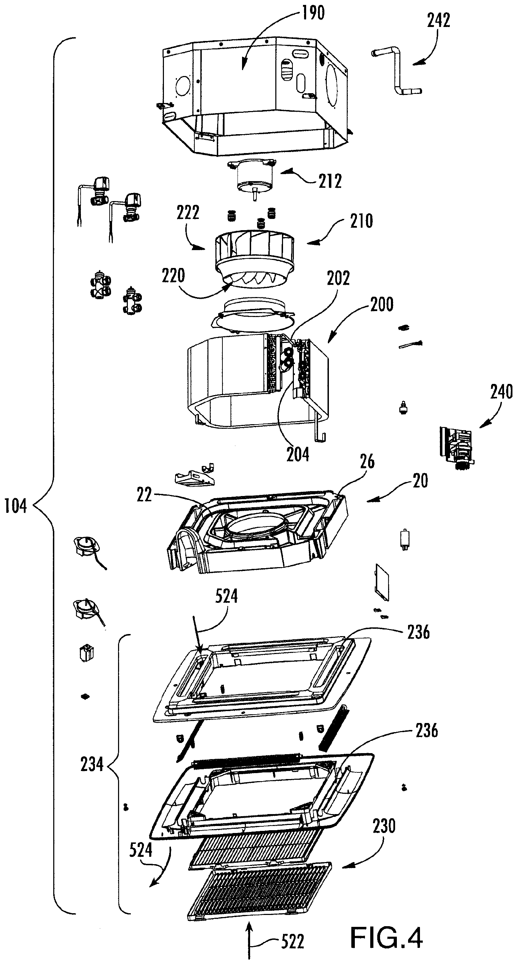

FIG. 4 shows an AHU 104 including the pan 20 and having a housing body/chassis 190 (e.g., sheet steel). A heat exchanger 200 has a planform generally corresponding to and above the channel 22. A lower edge portion of the heat exchanger may be within the channel. The heat exchanger extends upward to an upper edge portion. The exemplary heat exchanger is a plate coil heat exchanger with plates oriented generally radially. The heat exchanger has a liquid inlet 202 and a liquid outlet 204. An exemplary fan 210 is mounted to the shaft of a motor 212. The exemplary motor is mounted to the top of a housing of the AHU surrounding the heat exchanger. The exemplary fan is mounted below the motor within the heat exchanger and has a lower axial inlet 220 and radial outlet 222. In operation, the fan draws air upward along the leg 522 through a central grill 230 along a bezel assembly 234 at the bottom of the housing and drives the air radially outward through the heat exchanger (between the coils and plates of the heat exchanger). The exemplary air is then directed downward through the apertures 26 along the leg 524 and, therefrom, out peripheral ducts 236 of the bezel assembly.

As the air passes through the heat exchanger it is cooled causing moisture in the air to condense on the coils and plates and drip into the channel. FIG. 4 also shows the aforementioned pump 240 which may be connected to a discharge line 242 (e.g., a hose or a small flexible plastic tube) to discharge condensate water from the channel to a remote location.

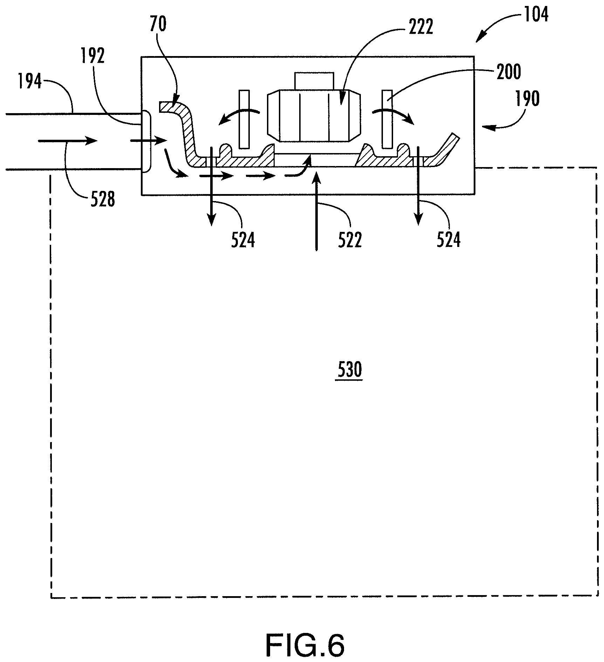

FIG. 6 shows a room interior 530. The AHU 104 is shown in a relatively simplified form with many components removed. The chassis 190 has a port/opening 192 connected to a fresh air intake duct 194 which admits/passes a fresh airflow 528. The flow 528 is diverted by the diverter 70 downward along the underside of the pan (e.g., between adjacent outlet ducts 236) of the bezel assembly of FIG. 4 so as to merge with the inlet flow 522 as a combined flow which passes through the fan and the coil.

Although an embodiment is described above in detail, such description is not intended for limiting the scope of the present disclosure. It will be understood that various modifications may be made without departing from the scope of the disclosure.

## Claims

1. A condensate drain pan (20) comprising:
a porous expanded polymeric substrate (80); and
a crystallized polymeric layer (82) atop the substrate;
the polymeric substrate (80) comprising expanded bead material; **characterised in that**:
the crystallized polymeric layer (82) is a crystallized layer of the expanded bead material of the polymeric substrate (80), the polymeric substrate below the crystallized layer having essentially no crystallization.

2. The pan of claim 1 wherein:
the polymeric substrate (80) comprises porous expanded polypropylene (PEPP).

3. The pan of claim 1 or 2 wherein:
along a majority of a well of the pan (20), the layer (82) is at least 0.2mm thick.

4. The pan of any preceding claim wherein:
a median thickness of the layer (82) is 0.2-1.0mm.

5. The pan of any preceding claim wherein:
the substrate (80) is shaped having:
a central aperture (24); and
a channel (22) encircling the aperture, the layer (82) being along the channel (22).

6. The pan of claim 5 wherein:
the pan (20) has a generally square planform; and
the channel (22) includes a deepened area (30) near one corner of the square planform and generally slopes toward the deepened area (30).

7. A system comprising:
the pan (20) of any preceding claim; and
a heat rejection heat exchanger (120; 200) positioned to discharge condensate to the pan (20).

8. The system of claim 7 wherein:
the pan (20) and heat rejection heat exchanger (120; 200) are part of an air handling unit (104); and
the air handling unit (104) further comprises a fan (210) positioned to drive an airflow across the heat rejection heat exchanger (120; 200).

9. The system of claim 8, further comprising:
a chiller (102) coupled to the heat rejection heat exchanger (120; 200) to deliver chilled liquid to the heat rejection heat exchanger (200).

10. The system of claim 7, 8 or 9 further comprising:
a pump (240) positioned to discharge condensate from the pan (20).

11. The system of any of claims 7 to 10 being a vapor compression system comprising:
a compressor (110);
a heat absorption heat exchanger (116) downstream of the compressor (110) along a refrigerant flowpath (118);
said heat absorption heat exchanger (116) downstream of the heat rejection heat exchanger (120) along the refrigerant flowpath (118); and
said pan (20).

12. A method for manufacturing a condensate drain pan as claimed in any of claims 1 to 6, the method comprising:
assembling mold sections (402, 404, 406);
injecting a bead material into a cavity (408) of the assembled mold sections (102, 404, 406);
locally heating so as to locally crystallize the bead material to form the crystallized polymeric layer (82) of the condensate drain pan from the bead material;
separating the mold sections (402, 404, 406); and
extracting a condensate drain pan molding having said locally crystallized layer (82).

13. The method of claim 12 wherein:
a steam injection into the cavity (408) at least partially fuses the material; and
the heating comprises a further steam injection, not into the cavity (408) or a further steam injection, into a separate cavity (424).

14. The method of claim 13 wherein:
the further steam injection is more locally confined than the prior steam injection.

## Patentansprüche

1. Kondensatablaufwanne (20), umfassend:
ein poröses expandiertes Polymersubstrat (80); und
eine kristallisierte Polymerschicht (82) auf dem Substrat;
wobei das Polymersubstrat (80) expandiertes Perlenmaterial umfasst; **dadurch gekennzeichnet, dass**:
die kristallisierte Polymerschicht (82) eine kristallisierte Schicht des expandierten Perlenmaterials des Polymersubstrats (80) ist, wobei das Polymersubstrat unterhalb der kristallisierten Schicht im Wesentlichen keine Kristallisation aufweist.

2. Wanne nach Anspruch 1, wobei:
das Polymersubstrat (80) poröses expandiertes Polypropylen (PEPP) umfasst.

3. Wanne nach Anspruch 1 oder 2, wobei:
entlang eines Großteils einer Mulde der Wanne (20) die Schicht (82) mindestens 0,2 mm dick ist.

4. Wanne nach einem vorstehenden Anspruch, wobei:
eine mittlere Dicke der Schicht (82) 0,2-1,0 mm beträgt.

5. Wanne nach einem vorstehenden Anspruch, wobei:
das Substrat (80) geformt ist mit:
einer zentralen Öffnung (24); und
einem Kanal (22), der die Öffnung umgibt, wobei sich die Schicht (82) entlang des Kanals (22) befindet.

6. Wanne nach Anspruch 5, wobei:
die Wanne (20) eine im Allgemeinen quadratische Grundrissform aufweist; und
der Kanal (22) einen vertieften Bereich (30) in der Nähe einer Ecke der quadratischen Grundrissform einschließt und im Allgemeinen zu dem vertieften Bereich (30) hin abfällt.

7. System, umfassend:
die Wanne (20) nach einem vorstehenden Anspruch; und
einen Wärmeabweisungswärmetauscher (120; 200), der so positioniert ist, dass er Kondensat in die Wanne (20) abführt.

8. System nach Anspruch 7, wobei:
die Wanne (20) und der Wärmeabweisungswärmetauscher (120; 200) Teil einer Luftbehandlungseinheit (104) sind; und
die Luftbehandlungseinheit (104) weiter ein Gebläse (210) umfasst, das so positioniert ist, dass es einen Luftstrom über den Wärmeabweisungswärmetauscher (120; 200) antreibt.

9. System nach Anspruch 8, weiter umfassend:
einen Kühler (102), der mit dem Wärmeabweisungswärmetauscher (120; 200) gekoppelt ist, um gekühlte Flüssigkeit an den Wärmeabweisungswärmetauscher (200) zu liefern.

10. System nach Anspruch 7, 8 oder 9, weiter umfassend:
eine Pumpe (240), die so positioniert ist, dass sie Kondensat aus der Wanne (20) abführt.

11. System nach einem der Ansprüche 7 bis 10, das ein Dampfkompressionssystem ist, umfassend:
einen Kompressor (110);
einen Wärmeabsorptionswärmetauscher (116) stromabwärts des Kompressors (110) entlang eines Kältemittelströmungswegs (118);
der Wärmeabsorptionswärmetauscher (116) stromabwärts des Wärmeabweisungswärmetauschers (120) entlang des Kältemittelströmungswegs (118); und
die Wanne (20).

12. Verfahren zur Herstellung einer Kondensatablaufwanne nach einem der Ansprüche 1 bis 6, wobei das Verfahren umfasst:
Zusammensetzen von Formbereichen (402, 404, 406);
Einspritzen eines Perlenmaterials in einen Hohlraum (408) der zusammengesetzten Formbereiche (102, 404, 406);
lokales Erhitzen, um das Perlenmaterial lokal zu kristallisieren, um die kristallisierte Polymerschicht (82) der Kondensatablaufwanne aus dem Perlenmaterial zu bilden;
Trennen der Formbereiche (402, 404, 406); und
Extrahieren eines Kondensatablaufwannenformteils, das die lokal kristallisierte Schicht (82) aufweist.

13. Verfahren nach Anspruch 12, wobei:
eine Dampfeinspritzung in den Hohlraum (408) das Material zumindest teilweise verschmilzt; und
die Erhitzung eine weitere Dampfeinspritzung, nicht in den Hohlraum (408) oder eine weitere Dampfeinspritzung, in einen separaten Hohlraum (424) umfasst.

14. Verfahren nach Anspruch 13, wobei:
die weitere Dampfeinspritzung lokal begrenzter ist als die vorhergehende Dampfeinspritzung.

## Revendications

1. Bac de récupération de condensat (20) comprenant :
un substrat polymère (80) expansé poreux ; et
une couche polymère cristallisée (82) au sommet du substrat ;
le substrat polymère (80) comprenant un matériau de billes expansées ; **caractérisé en ce que** :
la couche polymère cristallisée (82) est une couche cristallisée du matériau de billes expansées du substrat polymère (80), le substrat polymère sous la couche cristallisée ne présentant essentiellement aucune cristallisation.

2. Bac selon la revendication 1, dans lequel :
le substrat polymère (80) comprend un polypropylène expansé poreux (PEPP).

3. Bac selon la revendication 1 ou 2, dans lequel :
le long d'une majorité d'un puits du bac (20), la couche (82) est au moins de 0,2 mm d'épaisseur.

4. Bac selon une quelconque revendication précédente, dans lequel :
une épaisseur médiane de la couche (82) est de 0,2 à 1,0 mm.

5. Bac selon une quelconque revendication précédente, dans lequel :
le substrat (80) est formé en présentant :
une ouverture centrale (24) ; et
un canal (22) entourant l'ouverture, la couche (82) étant le long du canal (22).

6. Bac selon la revendication 5, dans lequel :
le bac (20) présente une forme en plan généralement carrée ; et
le canal (22) inclut une zone approfondie (30) à proximité d'un coin de la forme en plan carrée et est généralement incliné vers la zone approfondie (30).

7. Système comprenant :
le bac (20) selon une quelconque revendication précédente ; et
un échangeur de chaleur à rejet de chaleur (120 ; 200) positionné pour évacuer un condensat vers le bac (20).

8. Système selon la revendication 7, dans lequel :
le bac (20) et l'échangeur de chaleur à rejet de chaleur (120 ; 200) font partie d'une unité de traitement d'air (104) ; et
l'unité de traitement d'air (104) comprend en outre un ventilateur (210) positionné pour entraîner un flux d'air à travers l'échangeur de chaleur à rejet de chaleur (120 ; 200).

9. Système selon la revendication 8, comprenant en outre :
un refroidisseur (102) couplé à l'échangeur de chaleur à rejet de chaleur (120 ; 200) pour délivrer un liquide refroidi à l'échangeur de chaleur à rejet de chaleur (200).

10. Système selon la revendication 7, 8 ou 9, comprenant en outre :
une pompe (240) positionnée pour évacuer un condensat à partir du bac (20).

11. Système selon l'une quelconque des revendications 7 à 10, qui est un système de compression de vapeur comprenant :
un compresseur (110) ;
un échangeur de chaleur à absorption de chaleur (116) en aval du compresseur (110) le long d'un trajet d'écoulement de réfrigérant (118) ;
ledit échangeur de chaleur à absorption de chaleur (116) en aval de l'échangeur de chaleur à rejet de chaleur (120) le long du trajet d'écoulement de réfrigérant (118) ; et
ledit bac (20).

12. Procédé de fabrication d'un bac de récupération de condensat selon l'une quelconque des revendications 1 à 6, le procédé comprenant :
l'assemblage de sections de moule (402, 404, 406) ;
l'injection d'un matériau de billes dans une cavité (408) des sections de moule (102, 404, 406) assemblées ;
un chauffage local de manière à cristalliser localement le matériau de billes pour former la couche polymère cristallisée (82) du bac de récupération de condensat à partir du matériau de billes ;
la séparation des sections de moule (402, 404, 406) ; et
l'extraction d'un moulage de bac de récupération de condensat présentant ladite couche (82) localement cristallisée.

13. Procédé selon la revendication 12, dans lequel :
une injection de vapeur dans la cavité (408) fusionne au moins partiellement le matériau ; et
le chauffage comprend une injection de vapeur supplémentaire, pas dans la cavité (408) ou une injection de vapeur supplémentaire, dans une cavité (424) séparée.

14. Procédé selon la revendication 13, dans lequel :
l'injection de vapeur supplémentaire est plus localement confinée que l'injection de vapeur précédente.
